# EUROPÄISCHE PATENTSCHRIFT

(11) **EP 3 259 225 B1**
(45) Veröffentlichungstag und Bekanntmachung des Hinweises auf die Patenterteilung: **03.07.2019**
(21) Anmeldenummer: 16726274.0
(22) Anmeldetag: 02.05.2016
(51) Int. Cl.: B67C 7/00, B65G 29/00, B65G 47/84, B29C 49/46

(54) **ROTOR EINER VORRICHTUNG ZUM FORMEN UND/ODER FÜLLEN VON BEHÄLTERN AUS VORFORMLINGEN**
CAROUSEL OF A DEVICE FOR FORMING AND/OR FILLING OF ARTICLES FROM PREFORMS
CARROUSEL D'UN DISPOSITIF POUR MOULER ET/OU REMPLIR DES ARTICLES À PARTIR DES PRÉFORMS

(30) Priorität: 30.04.2015 DE 102015005457
(43) Veröffentlichungstag der Anmeldung: 27.12.2017
(73) Patentinhaber: KHS Corpoplast GmbH, 22145 Hamburg (DE)
(72) Erfinder: LINKE, Michael, 22159 Hamburg (DE); LITZENBERG, Michael, 21039 Börnsen (DE); MEYER, Niels, 22869 Schenefeld (DE)
(74) Vertreter: Hausfeld, Norbert
(86) Internationale Anmeldenummer: PCT/EP2016/000707
(87) Internationale Veröffentlichungsnummer: WO 2016/173720

(56) Entgegenhaltungen:
- EP-A1- 2 179 960
- WO-A1-98/35815
- WO-A1-2015/059104
- US-A- 4 511 027

## Beschreibung

Die vorliegende Erfindung betrifft einen Rotor einer Vorrichtung zum Formen und/oder Füllen von Behältern aus Vorformlingen.

Herkömmlich werden Behälter, insbesondere Flaschen, im Blasformverfahren durch ein unter Druck in einen vorgeheizten Vorformling einströmendes Formgas geformt und in einem zweiten Schritt mit einem Füllgut, insbesondere einem flüssigen Füllgut, befüllt. Zur rationelleren Herstellung sind in letzter Zeit Verfahren entwickelt worden, bei denen der vorgeheizte Vorformling nicht durch ein Druckgas sondern durch das unter Druck zugeführte flüssige Füllgut in einem Schritt geformt und gefüllt werden kann. Ein solches Verfahren ist z.B. aus der DE 10 2010 007 541 A1 bekannt.

Vorformlinge für die bekannten Verfahren bestehen aus einem thermoplastischen Kunststoff, beispielsweise PET, PE oder PP, und werden üblicherweise im Spritzgussverfahren hergestellt. Für die Umformung in Behälter ist es dabei unerheblich, ob die Vorformlinge vorher gelagert werden oder unmittelbar nach ihrer Herstellung dem Umformprozess zugeführt werden.

Damit ein Vorformling in einen Behälter umgeformt werden kann, wird er thermisch konditioniert, also insbesondere erwärmt und mit einem geeigneten Temperaturprofil versehen. Dabei wird der Körper des Vorformlings z.B. auf ca. 120 °C erwärmt und formbar, während der Mündungsbereich nur deutlich niedrigere Temperaturen erreichen darf, da der Vorformling am Mündungsbereich in der Form- und Füllmaschine gehalten wird und sich unter den dort üblichen Haltekräften nicht verformen darf.

Die Vorformlinge bzw. geformten Behälter werden auf Transporträdern durch die Maschine bewegt, die Halterungen für Vorformlinge bzw. Behälter aufweisen. Dabei gibt es Prozessräder, die z.B. mit den Form- und Füllstationen oder den Verschließstationen der Maschine kombiniert sind, und auf denen der Vorformling geformt und gefüllt bzw. verschlossen wird, oder reine Transporträder, auf denen der Vorformling bzw. der Behälter von einer Station zur nächsten transportiert wird. Auf dem Prozessrad für die Formung und Füllung ist ein großer Abstand zwischen den einzelnen Vorformlingen erforderlich, da die Form- und Füllstationen ausreichend Platz benötigen. Bei der thermischen Konditionierung ist ein engerer Abstand hingegen vorteilhaft, da die Vorformlinge in einem relativ kleinen Ofen thermisch konditioniert werden müssen.

Die Anpassung der Abstände erfolgt über Transferräder, die normalerweise entweder teleskopierbare oder schwenkbare Arme aufweisen. Mit teleskopierbaren Armen können die Abstände der Vorformlinge zueinander durch Ausfahren der Arme eingestellt werden. Sind die Arme kurz, ist der Abstand von benachbarten Vorformlingen klein, sind die Arme lang, ist der Abstand groß. Transferräder mit schwenkbaren Armen haben eine fest vorgegebene Armläge. Durch horizontales Schwenken der Arme kann der Abstand eingestellt und lokal verändert werden.

Bei der Übergabe zwischen den Rädern kommt es durch die Umkehrung der Drehrichtung zu hohen Beschleunigungen des von einem Rad zum anderen übergebenen Vorformlings bzw. Behälters. Dabei treten erhebliche Kräfte auf, die die Halteelemente belasten und zu einer Unwucht der Maschine führen können, insbesondere wenn die Behälter bereits gefüllt sind. Außerdem besteht die Gefahr, dass flüssiges Füllgut im Behälter überschwappt, solange der Behälter noch nicht geschlossen ist, also insbesondere bei der Übergabe zwischen der Füll- und der Verschließstation.

Ein Rotor mit Bearbeitungsstationen gemäß dem Oberbegriff des Anspruchs 1 ist aus der US 4,511,027 bekannt.

Das am 30. April 2015 veröffentlichte Dokument WO 2015/059104 A1 zeigt eine Vorrichtung zum Formen und/oder Füllen von Behältern aus Vorformlingen, wobei Bearbeitungsstationen teilweise kreisförmig von Rotoren und teilweise linear von Bändern bewegt werden.

EP 2179960 A1 zeigt eine Vorrichtung zum Füllen von Behältern mit Bearbeitungsstationen auf einem Rotor, wobei die Behälter mittels radial beweglicher Greifer auf einer Bahn bewegt werden, deren Abstand zur Drehachse des Rotors unterschiedlich ist und deren Krümmungsradius abschnittsweise größer ist als der größte Abstand der Bahn zur Drehachse des Rotors.

Es ist Aufgabe der vorliegenden Erfindung, einen Rotor einer Vorrichtung zum Formen und/oder Füllen von Behältern aus Vorformlingen vorzuschlagen, der die Übergabe der Vorformlinge oder der gefüllten Behälter zu einer folgenden Bearbeitungsstation ermöglicht, bei der reduzierte Kräfte auf den Vorformling bzw. den gefüllten Behälter wirken.

Diese Aufgabe wird gelöst durch einen Rotor einer Vorrichtung zum Formen und/oder Füllen von Behältern aus Vorformlingen gemäß Anspruch 1 mit einer Drehachse und mit um die Drehachse rotierenden Bearbeitungsstationen zur Aufnahme von Vorformlingen oder Behältern, wobei sich die Bearbeitungsstationen auf einer geschlossenen Bahn um die Drehachse bewegen. Dabei ist unter anderem der Abstand der Bahn zur Drehachse in Abhängigkeit von der Position auf der Bahn unterschiedlich und der Krümmungsradius der Bahn in mindestens einem Abschnitt größer als der größte Abstand der Bahn zur Drehachse.

Der erfindungsgemäße Rotor rotiert bei Betrieb der Vorrichtung um eine Drehachse. Er hat dabei die Funktion der oben beschriebenen Prozessräder, jedoch wird hier der Begriff Rotor gewählt, um nicht den Eindruck zu erwecken, der Umfang des Rotors sei kreisförmig.

Der Rotor verfügt über Bearbeitungsstationen zur Aufnahme der Vorformlinge bzw. der geformten und eventuell bereits gefüllten Behälter. Die Bearbeitungsstationen bewegen sich im Betrieb auf einer geschlossenen Bahn um die Drehachse. Der Abstand dieser Bahn von der Drehachse ist dabei veränderlich und von der Position auf der Bahn abhängig. So kann die Bahn Abschnitte umfassen, die unterschiedliche Krümmungsradien aufweisen. Die Bahn kann über ihre gesamte Länge fest vorgegeben und bei jedem Umlauf identisch sein oder in Bereichen frei und variabel sein. Die Übergabepunkte der Vorformlinge bzw. Behälter in und aus dem Rotor haben aber vorzugsweise definierte radiale Positionen.

Gemäß der Erfindung soll der Krümmungsradius der Bahn in mindestens einem Abschnitt größer sein als der größte Abstand der Bahn zur Drehachse. Dadurch wird erreicht, dass die Kreisbeschleunigung in diesem Abschnitt niedriger ist als im Falle einer Kreisbahn mit konstantem Radius wie bei herkömmlichen Rädern.

Vorzugsweise ist die Bahn so gestaltet, dass der Krümmungsradius der Bahn in diesem Abschnitt deutlich größer als der größte Abstand der Bahn zur Drehachse ist.

Die Kräfte, die in diesem Bereich auf den Rohling oder den Behälter wirken, sind gegenüber Rädern mit konstantem Durchmesser deutlich reduziert. Durch die verringerte Krümmung der Bahn in diesem Bereich bietet es sich an, innerhalb einer Vorrichtung zum Formen und/oder Füllen von Behältern dort die Übergabe von einem Rotor zum nächsten vorzusehen. Die auf die Vorformlinge bzw. Behälter bei der Übergabe wirkenden Kräfte sind gegenüber herkömmlichen Rädern deutlich reduziert. Die Halteelemente sind weniger belastet. Die Gefahr des Überschwappens eines gefüllten aber noch nicht verschlossenen Behälters ist reduziert.

In einer Ausführungsform verfügt der erfindungsgemäße Rotor über Haltearme zur Aufnahme der Bearbeitungsstationen. Die Haltearme können insbesondere teleskopierbar, schwenkbar oder abknickbar sein.

Die radiale Positionierung einer Bearbeitungsstation kann vorteilhaft kurvengesteuert erfolgen.

Die Bearbeitungsstationen können mit Bearbeitungsvorrichtungen versehen sein, insbesondere mit einem Formkopf, einem Füllkopf, einem kombinierten Form- und Füllkopf oder einem Verschließer. Besondere Vorteile ergeben sich beim Einsatz eines erfindungsgemäßen Rotors für den Rotor einer Füllstation und/oder den Rotor einer Verschließstation, da bei der Übergabe ein Überschwappen des gefüllten Behälters vermieden werden kann.

Beispielsweise können dem Rotor einer Füllstation zuvor im Blasformverfahren hergestellte Behälter zugeführt werden. Soll in einem Schritt ein gefüllter Behälter durch unter Druck in einen Vorformling eingeleitetes Füllgut hydraulisch geformt werden, so können dem Rotor einer Form- und Füllstation Vorformlinge zugeführt werden.

In der Füllstation werden die Behälter gefüllt bzw. die Vorformlinge in gefüllte Behälter umgeformt. Anschließend muss der Füllkopf bzw. der Form- und Füllkopf von der Behältermündung entfernt und der gefüllte Behälter verschlossen werden. Dies geschieht normalerweise in einer separaten Verschließstation, die an einem weiteren Prozessrotor angeordnet ist.

Werden die gefüllten aber noch unverschlossenen Behälter von einem herkömmlichen Prozessrad zum nächsten überführt, so besteht die Gefahr, dass das Füllgut durch die durch die Änderung der Drehrichtung wirkenden Kräfte überschwappt. Außerdem ist die Belastung der Halteelemente durch das Gewicht des Füllguts hoch, insbesondere bei Behältervolumina von 1,5 Litern und mehr.

Mit dem erfindungsgemäßen Rotor kann die Übergabe von einem zum nächsten Rotor in einem Bereich der Bahn der Bearbeitungsstationen erfolgen, in dem der Krümmungsradius der Bahn groß ist. Dadurch sind die bei der Änderung der Drehrichtung auftretenden Kräfte geringer und das Füllgut schwappt weniger.

Erfindungsgemäß entspricht die Form der Bahn dabei dem Umfang eines sogenannten Gleichdicks. Bei einem Gleichdick handelt es sich um eine geschlossene Kurve konstanter Breite. Ihre Umfangslinie berührt in jeder Lage alle vier Seiten eines geeigneten Quadrats.

Der Vorteil einer Bahn in Form eines Gleichdicks ist, dass einander gegenüberliegende Bearbeitungsstationen voneinander immer denselben Abstand haben. Damit lassen sich Prozessrotoren konstruieren, die eine vorteilhafte Führung der Zuleitungen zu den an den Bearbeitungsstationen angeordneten Bearbeitungsvorrichtungen aufweisen. Müssen die Bearbeitungsvorrichtungen mit Druckluft und/oder Füllgut versorgt werden, geschieht dies üblicherweise im Bereich der Drehachse des Rotors über Zuleitungen, die die unterschiedlichen Abstände der Bearbeitungsstationen von der Drehachse ausgleichen müssen. Da einander gegenüberliegende Bearbeitungsstationen bei einem Gleichdick immer denselben Abstand voneinander haben, können die Zuleitungen so ausgelegt werden, dass die von der Drehachse ausgehenden Leitungen zu gegenüberliegenden Bearbeitungsstationen insgesamt eine konstante Länge haben. Überlängen, die bei der Verkürzung des Abstands einer Bearbeitungsstation zur Drehachse auf geeignete Weise aufgefangen werden müssen, sind nicht erforderlich. Die Leitungen werden weniger belastet und sind dadurch länger haltbar.

Ein geeignetes Gleichdick ähnelt z.B. einem Reuleaux-Dreieck oder einem anderen Reuleaux-Polygon. Die Bahn folgt dabei einer konstruktiv sinnvoll umsetzbaren Kurve. Die Ecken werden in der Praxis gerundet ausgeführt, um maximale Beschleunigungswerte in diesen Bereichen zu reduzieren. Die Seiten weisen eine konvexe Form auf. Als Ecken eines Gleichdicks sollen hier die Bereiche mit kleinerem Krümmungsradius verstanden werden, während die Seiten einen größeren Krümmungsradius aufweisen. Jede andere Form eines Gleichdicks ist ebenfalls geeignet.

Insbesondere Gleichdicke mit einer geraden Anzahl von Ecken sind für die erfindungsgemäßen Rotoren geeignet. Die Anzahl der Bearbeitungsstationen kann dabei vorteilhaft einem Vielfachen der Eckenanzahl des Gleichdicks entsprechen. Damit wird ein guter Lauf der Rotoren ohne Unwucht erreicht.

Eine gerade Anzahl von Bearbeitungsstationen ist bevorzugt; so dass jeweils zwei Bearbeitungsstationen einander gegenüberliegen können. Weist die Bahn die Form eines Gleichdicks auf, können statt beispielsweise teleskopierbaren Armen auch feste Arme verwendet werden, die einander gegenüberliegende Bearbeitungsstationen verbinden. Die Arme können dann rechtwinklig zur Achse verschiebbar sein, so dass die radiale Position der beiden Bearbeitungsstationen steuerbar ist.

Verschiedene Ausführungsbeispiele der Erfindung werden im Folgenden anhand der beigefügten Abbildungen näher erläutert, die Folgendes darstellen:
- Figur 1: stellt einen erfindungsgemäßen Rotor schematisch dar;
- Figur 2: zeigt schematisch eine Form- und Füllstation und eine Verschließstation einer Maschine zur Herstellung von gefüllten Behältern aus Vorformlingen, die beide erfindungsgemäße Rotoren aufweisen;
- Figur 3: zeigt schematisch einen erfindungsgemäßen Rotor, dessen Bahn einem Reuleux-Dreieck ähnelt;
- Figur 4: zeigt schematisch einen erfindungsgemäßen Rotor mit 18 Bearbeitungsstationen und teleskopierbaren Armen;
- Figur 5: zeigt schematisch einen erfindungsgemäßen Rotor mit 18 Bearbeitungsstationen und abknickbaren Armen.

Es versteht sich für den Fachmann von selbst, dass die hier dargestellten Zeichnungen lediglich zur Veranschaulichung des Prinzips der Erfindung dienen sollen und nur schematisch und nicht maßstabsgerecht wiedergegeben sind. Insbesondere dienen die dargestellten Abmessungen und Größenverhältnisse der Elemente untereinander nur der Veranschaulichung. Ebenso ist die Anzahl von Bearbeitungsstationen in den Abbildungen aus Gründen der Übersichtlichkeit reduziert. Die tatsächlichen Abmessungen und Größenverhältnisse kann der Fachmann frei aufgrund seiner Fachkenntnisse bestimmen.

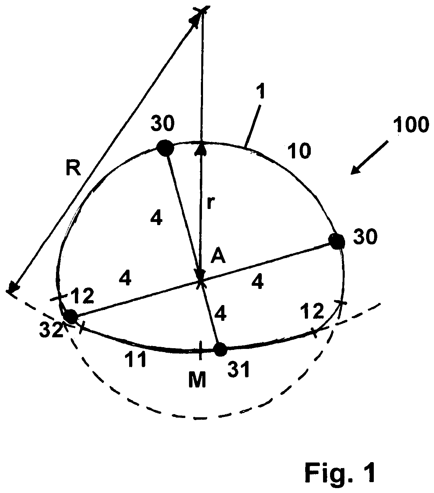

Figur 1 zeigt schematisch die Bahn 1 eines erfindungsgemäßen Rotors 100. Zu erkennen ist die Drehachse A des Rotors 100, um die an teleskopierbaren Armen 4 befindliche Bearbeitungsstationen 30, 31, 32 rotieren. Im zur Illustration dargestellten Ausführungsbeispiel handelt es sich um vier Bearbeitungsstationen 30, 31, 32. Natürlich kann am Rotor jede beliebige Anzahl von Bearbeitungsstationen angeordnet werden.

Die Bahn 1 weist in diesem Ausführungsbeispiel im Wesentlichen vier unterschiedliche Abschnitte 10, 11, 12 auf, die in der Darstellung durch Markierungen voneinander abgegrenzt sind. Der Abschnitt 10 verläuft im Wesentlichen kreisförmig um die Drehachse A, weist also den Radius r auf. Der Abschnitt 11 weist eine wesentlich geringere Krümmung als der Abschnitt 10 auf und hat somit einen deutlich größeren Krümmungsradius R. Die beiden Abschnitte 12 stellen den Übergang zwischen den Bereichen 10 und 11 dar und haben eine stärkere Krümmung, also kleinere Krümmungsradien als die beiden anderen Abschnitte.

Die Bahn 1 weist im Abschnitt 10 einen konstanten Abstand zur Drehachse A auf. Der Abstand zur Drehachse A verringert sich in den Abschnitten 12 und 11 kontinuierlich bis zur Mitte M des Abschnitts 11 und vergrößert sich dann wieder.

Der maximale Abstand der Bahn 1 zur Drehachse A des Rotors 100 liegt im Bereich 10 und entspricht den Krümmungsradius r in diesem Bereich. Der Krümmungsradius im Bereich 11 ist R und wesentlich größer als der größte Abstand r der Bahn von der Drehachse A.

Die auf einen in der Bearbeitungsstation 31 befindlichen Behälter wirkende Zentrifugalkraft bei sich drehendem Rotor 100 ist deshalb wesentlich geringer als die auf einen in der Bearbeitungsstation 30 befindlichen Behälter wirkende Kraft.

Die Bahn 1 des Rotors wird durch kurvengesteuerte, teleskopierbare Arme 4 erreicht.

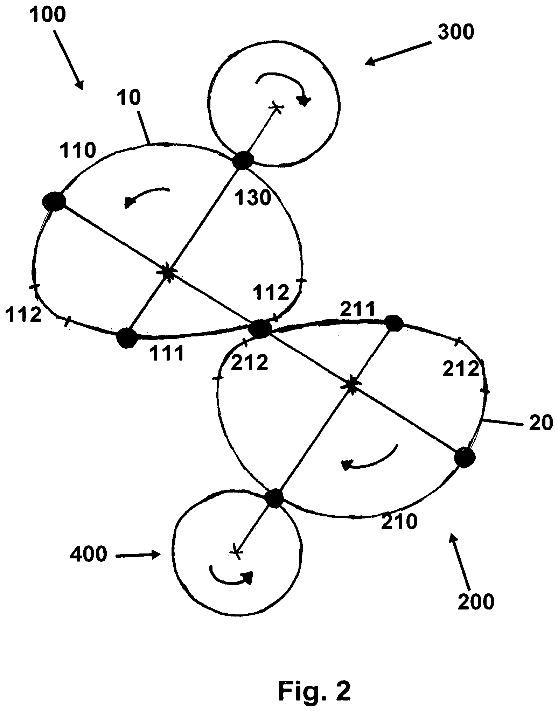

Figur 2 zeigt zwei erfindungsgemäße Rotoren wie in Figur 1 dargestellt in einem Ausschnitt aus einer Flaschenabfüllanlage. Der dargestellte Ausschnitt umfasst einen Rotor 100 einer Füllstation, an der die Füllung der Behälter erfolgt, und einen zweiten Rotor 200 einer Verschließstation, an der die Verschließung der gefüllten Behälter erfolgt. Ein Eingabestern 300 sorgt für die Zuführung von leeren Behältern. Ein Ausgabestern 400 sorgt für die Ausgabe der gefüllten und verschlossenen Behälter. Die Anlage umfasst typischerweise vor dem Eingabestern 300 und dem Ausgabestern 400 weitere Komponenten, die hier zur Vereinfachung nicht dargestellt sind.

Die vom Eingabestern 300 zugeführten, in herkömmlicher Weise, beispielsweise im Blasformverfahren geformten leeren Behälter werden einer Bearbeitungsstation 130 am Rotor 100 einer Füllstation im Bereich 110 übergeben.

Der Füllkopf der Füllstation wird auf die Behältermündung aufgesetzt und der Behälter gefüllt. Der Form- und Füllkopf verbleibt während der Rotation des Rotors bis zum Ende des Bahnabschnitts 112 auf dem gefüllten Behälter. Trotz der erhöhten Kräfte, die im Bereich 112 auf den Behälter wirken, kann kein Füllgut überschwappen, da der Füllkopf noch auf den Behälter aufgesetzt ist. Im Bahnabschnitt 111 wirken aufgrund des großen Krümmungsradius dieses Abschnitts wesentlich geringere Kräfte als in den Bereichen 110 und 112. Der Füllkopf kann von der Behältermündung entfernt werden.

Der Behälter wird dann gegen Ende des Bereichs 111 an den Rotor 200 der Verschließstation übergeben. Auch der Rotor 200 ist erfindungsgemäß ausgeführt, so dass seine Bahn 20 im Bereich der Übergabe des Behälters einen Bereich 211 mit großem Krümmungsradiums aufweist. Im Vergleich zu herkömmlichen Prozessrädern mit kreisförmigen Bahnen wirken auf den Behälter selbst beim Wechsel der Krümmungsrichtung beim Übergang zwischen der Füll- und der Verschließstation deutlich verringerte Kräfte.

Die Verschließvorrichtung schließt die Mündung eines gefüllten Behälters vor Erreichen des Bahnabschnitts 212, in dem eine größere Beschleunigung auf den Behälter wirkt, zumindest provisorisch, so dass kein Füllgut mehr überschwappen kann.

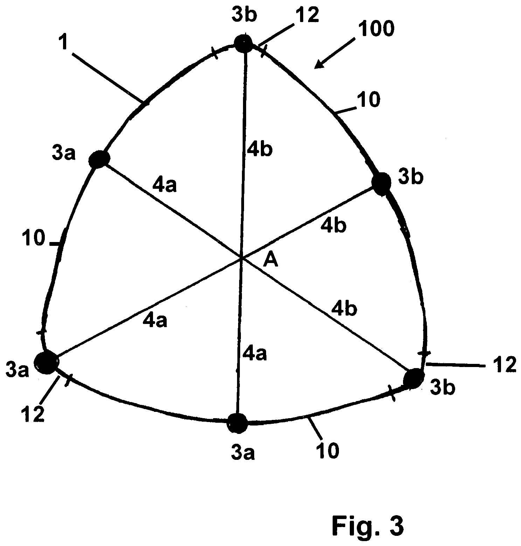

Figur 3 zeigt schematisch einen Rotor 100, dessen Bahn 1 die Form eines sogenannten Gleichdicks aufweist, hier einem sogenannten Reuleaux-Dreieck nachempfunden ist, wobei die Ecken leicht gerundet sind. Ein Gleichdick hat an jeder Stelle denselben Durchmesser. Sind auf dem Rotor 100 gegenüberliegend Bearbeitungsstationen 3a, 3b angeordnet, so ist die Gesamtlänge der Haltearme 4a und 4b von zwei gegenüberliegenden Bearbeitungsstationen 3a, 3b immer unverändert. Dies vereinfacht die Konstruktion eines Prozessrotors, insbesondere eines Rotors mit Form- und/oder Füllstationen, da die Versorgungsleitungen, die zu gegenüberliegenden Bearbeitungsstationen 3a, 3b führen, wie z.B. Druckluft- oder Füllgutleitungen, insgesamt eine konstante Länge aufweisen.

Die Arme 4a, 4b bei dieser Anordnung können teleskopierbar sein oder gegenüberliegende Arme 4a, 4b zusammen starr ausgeführt und über die Drehachse A verschiebbar sein.

Die Bahn 1 hat dabei Abschnitte 10, die einen großen Krümmungsradius aufweisen, und Abschnitte 12, die einen kleinen Krümmungsradius aufweisen. In einem Abschnitt 10 mit großem Krümmungsradius kann dabei vorteilhaft die Übergabe zum nächsten Rotor erfolgen, während in den Abschnitten 12 mit kleinem Krümmungsradius insbesondere bereits gefüllte Behälter in geeigneter Weise gegen Überschwappen des Füllguts gesichert werden sollten. Dies kann beispielsweise dadurch erfolgen, dass sich der Füllkopf in diesem Abschnitten noch auf dem Behälter befindet, oder durch andere geeignete Maßnahmen.

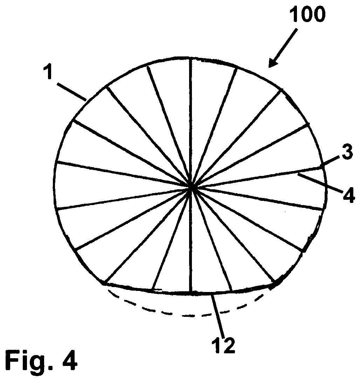

Figur 4 zeigt einen erfindungsgemäßen Rotor 100 mit 18 Bearbeitungsstationen 3 am Ende von teleskopierbaren Haltearmen 4. Die Bahn 1 des Rotors ist kreisförmig mit einem Abschnitt 12, in dem der Kreis abgeflacht ist und einen geringeren Krümmungsradius aufweist. Die Kreisbahn ist im abgeflachten Abschnitt 12 gestrichtelt dargestellt.

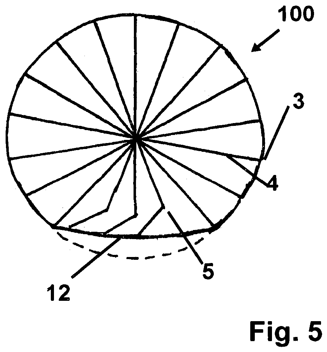

Figur 5 zeigt einen Rotor 100 wie in Figur 4, wobei die Abweichung von der Kreisbahn nicht durch die Verkürzung der Armlänge der Haltearme 4 erreicht wird. Die Haltearme 4 weisen vielmehr Gelenke 5 auf, an denen die Arme entgegen der Drehrichtung des Rotors abgeknickt werden können. Bei Eintritt in den Abschnitt 12 werden die Arme leicht geknickt, so dass die Bearbeitungsstationen 3 dem abgeflachten Verlauf der Bahn folgen. In diesem Bereich kann dann die Übergabe des in der Bearbeitungsstationen befindlichen Behälters an den nächsten Rotor innerhalb der Vorrichtung erfolgen. Die Haltearme 4 können dann leer wieder in die ursprüngliche Position zurückklappen und erneut der Kreisbahn im Abschnitt 10 folgen. Vorteil dieser Gestaltung ist, dass die Gesamtlänge jedes Arms 4 unverändert bleibt. Versorgungsleitungen, z.B. für Druckluft oder Füllgut, die entlang des Arms 4 verlegt sind, bleiben mit dem Arm verbunden und weisen nicht zeitweise eine überschüssige Länge auf, wenn der Arm teleskopisch verkürzt wird, wie im Ausführungsbeispiel aus Figur 4.

## Patentansprüche

1. Rotor (100) einer Vorrichtung zum Formen und/oder Füllen von Behältern aus Vorformlingen mit einer Drehachse (A) und mit um die Drehachse (A) rotierenden Bearbeitungsstationen (3, 3a, 3b) zur Aufnahme von Vorformlingen oder Behältern, wobei sich die Bearbeitungsstationen (3, 3a, 3b) auf einer geschlossenen Bahn (1) um die Drehachse (A) bewegen, wobei der Abstand der Bahn (1) zur Drehachse (A) in Abhängigkeit von der Position auf der Bahn (1) unterschiedlich ist und der Krümmungsradius der Bahn (1) in mindestens einem Abschnitt (12, 112, 212) größer ist als der größte Abstand der Bahn (1) zur Drehachse (A), **dadurch gekennzeichnet, dass** die Bahn (1) die Form des Umfangs eines Gleichdicks aufweist.

2. Rotor (100) nach Anspruch 1, **dadurch gekennzeichnet, dass** der Rotor über Haltearme (4, 4a, 4b) zur Aufnahme der Bearbeitungsstationen (3, 3a, 3b) verfügt, die teleskopierbar, schwenkbar oder abknickbar sind.

3. Rotor (100) nach Anspruch 1 oder 2, **dadurch gekennzeichnet, dass** die radiale Positionierung der Bearbeitungsstationen (3, 3a, 3b) kurvengesteuert erfolgt.

4. Rotor (100) nach einem der Ansprüche 1 bis 3, **dadurch gekennzeichnet, dass** die Bearbeitungsstationen (3, 3a, 3b) über Bearbeitungsvorrichtungen verfügen, insbesondere über einen Formkopf, einen Füllkopf, einen kombinierten Form- und Füllkopf oder einen Verschließer.

5. Rotor (100) nach Anspruch 1, **dadurch gekennzeichnet, dass** die Bahn der Form eines Reuleaux-Dreiecks oder eines Reuleaux-Polygons folgt.

6. Rotor (100) nach einem der Ansprüche 1 bis 5, **dadurch gekennzeichnet, dass** der Rotor eine gerade Anzahl von Bearbeitungsstationen (3, 3a, 3b) aufweist.

7. Rotor (100) nach einem der Ansprüche 1 bis 6, **dadurch gekennzeichnet, dass** der Rotor einander gegenüberliegende Bearbeitungsstationen (3a, 3b) aufweist, deren Abstand voneinander an jeder Position der Bahn (1) gleich groß ist.

8. Rotor (100) nach einem der Ansprüche 1, oder 3 bis 7, **dadurch gekennzeichnet, dass** der Rotor über starre Arme (4a, 4b) verfügt, die senkrecht zur Drehachse (A) verschiebbar sind.

9. Rotor (100) nach einem der Ansprüche 1 bis 7, **dadurch gekennzeichnet, dass** der Rotor über Arme (4) mit Gelenken (5) verfügt, an denen die Arme entgegen der Drehrichtung des Rotors abknickbar sind.

## Claims

1. A carousel (100) of a device for moulding and/or filling containers from preforms, having an axis of rotation (A) and having processing stations (3, 3 a, 3b) for receiving preforms or containers, said processing stations (3, 3a, 3b) rotating about the axis of rotation (A), wherein
the processing stations (3, 3a, 3b) move about the axis of rotation (A) on a closed path (1), wherein the distance of the path (1) from the axis of rotation (A) differs subject to the position on the path (1) and the radius of curvature of the path (1) is, in at least one section (12, 112, 212), larger than the largest distance of the path (1) from the axis of rotation (A),
**characterised in that**
- the path (1) has the shape of the perimeter of a curve of constant width.

2. The carousel (100) according to Claim 1, **characterised in that** the carousel is provided with holding arms (4, 4a, 4b) for receiving the processing stations (3, 3a, 3b), said holding arms (4, 4a, 4b) being telescopable, pivotable or bendable.

3. The carousel (100) according to Claim 1 or 2, **characterised in that** the radial positioning of the processing stations (3, 3a, 3b) is achieved in a cam-controlled manner.

4. The carousel (100) according to any one of Claims 1 to 3, **characterised in that** the processing stations (3, 3a, 3b) are provided with processing devices, more particularly with a moulding head, a filling head, a combined moulding and filling head, or a closing device.

5. The carousel (100) according to Claim 1, **characterised in that** the path follows the shape of a Reuleaux triangle or a Reuleaux polygon.

6. The carousel (100) according to any one of Claims 1 to 5, **characterised in that** the carousel has an even number of processing stations (3, 3a, 3b).

7. The carousel (100) according to any one of Claims 1 to 6, **characterised in that** the carousel has processing stations (3, 3b) which are opposed to each other and the distance of which from one another is identical in size at every position of the path (1).

8. The carousel (100) according to any one of Claims 1 or 3 to 7, **characterised in that** the carousel is provided with rigid arms (4a, 4b) which are displaceable perpendicular to the axis of rotation (A).

9. The carousel (100) according to any one of Claims 1 to 7, **characterised in that** the carousel is provided with arms (4) having joints (5), said arms being bendable at said joints (5) opposite to the direction of rotation of the carousel.

## Revendications

1. Rotor (100) d'un dispositif pour mouler et/ou remplir des récipients réalisés à partir de préformes, avec un axe de rotation (A) et, en rotation autour de cet axe (A), des stations de traitement (3, 3a, 3b) pour accueillir des préformes ou des récipients, les stations de traitement (3, 3a, 3b) se déplaçant sur une trajectoire fermée (1) autour de l'axe de rotation (A), la distance entre la trajectoire (1) et l'axe de rotation (A) étant différente selon la position sur la trajectoire (1) et le rayon de courbure de la trajectoire (1) étant, sur au moins une section (12, 112, 212), supérieur à la plus grande distance entre la trajectoire (1) et l'axe de rotation (A), **caractérisé en ce que** la trajectoire (1) a la forme de la périphérie d'une courbe de largeur constante.

2. Rotor (100) selon la revendication 1, **caractérisé en ce qu'**il est doté de bras de support (4, 4a, 4b) télescopiques, pivotants ou repliables pour recevoir les stations de traitement (3, 3a, 3b).

3. Rotor (100) selon la revendication 1 ou 2, **caractérisé en ce que** le positionnement radial des stations de traitement (3, 3a, 3b) est effectué par une commande à came.

4. Rotor (100) selon l'une des revendications 1 à 3, **caractérisé en ce que** les stations de traitement (3, 3a, 3b) sont dotées de dispositifs de traitement, notamment une tête de moulage, une tête de remplissage, une tête combinée de moulage et de remplissage ou un obturateur.

5. Rotor (100) selon la revendication 1, **caractérisé en ce que** la trajectoire suit la forme d'un triangle de Reuleaux ou d'un polygone de Reuleaux.

6. Rotor (100) selon l'une des revendications 1 à 5, **caractérisé en ce que** le rotor présente un nombre pair de stations de traitement (3, 3a, 3b).

7. Rotor (100) selon l'une des revendications 1 à 6, **caractérisé en ce que** le rotor présente des stations de traitement (3a, 3b) opposées l'une à l'autre dont l'écartement reste constant à chaque position de la trajectoire (1).

8. Rotor (100) selon l'une des revendications 1 ou 3 à 7, **caractérisé en ce que** le rotor est doté de bras rigides (4a, 4b) déplaçables perpendiculairement à l'axe de rotation (A).

9. Rotor (100) selon l'une des revendications 1 à 7, **caractérisé en ce que** le rotor est doté de bras (4) munis d'articulations (5) au niveau desquelles les bras peuvent être repliés en sens contraire au sens de rotation du rotor.
